Europäisches Patentamt

European Patent Office

Office européen des brevets

(11) Publication number: **0 426 257 A2**

# EUROPEAN PATENT APPLICATION

(21) Application number: 90202883.6

(22) Date of filing: 31.10.90

(51) Int. Cl.⁵: **B29C 61/06**, B29C 61/00, H01R 4/72, H02G 15/18

(30) Priority: 02.11.89 GB 8924658

(43) Date of publication of application:
08.05.91 Bulletin 91/19

(84) Designated Contracting States:
DE FR GB IT

(71) Applicant: N.V. Philips' Gloeilampenfabrieken
Groenewoudseweg 1
NL-5621 BA Eindhoven(NL)

(72) Inventor: Robinson, Joseph Gordon c/o
Claybrook, The Hyde,
Winchcombe, Cheltenham,
Gloucestershire, GL54 5QR(GB)

(74) Representative: Clark, Jane Anne et al
PHILIPS ELECTRONICS Patents and Trade
Marks Department Philips House 188
Tottenham Court Road
London W1P 9LE(GB)

(54) A heat recoverable sleeve.

(57) A heat-recoverable sleeve (6) for forming a protective cover on a cable, for example a joint between two cables (5), is formed of a cross-linked polymer material, preferably a cross-linked polyethylene, providing a matrix within which are dispersed discrete elastomeric particles formed of, for example, ethylene-propylene-diene terpolymer (EPDM) or ethylene-propylene copolymer (EPR). An inner surface of the sleeve (6) may be provided with an adhesive layer (7). The heat-recoverable sleeve (6) shows high resistance to propagation of cracks or splits during heat shrinking.

FIG. 1

EP 0 426 257 A2

## A HEAT RECOVERABLE SLEEVE

This invention relates to a heat recoverable sleeve for forming a protective cover on a cable, for example on telecommunications cables.

It is occasionally necessary to provide a protective cover on a cable, for example when the cable has been repaired or a joint has otherwise been formed between two cables. Since this requires the removal of some of the protective sheath surrounding the cable it is therefore necessary to provide the resultant joint with a protective cover having good resistance to both moisture ingress and to mechanical damage, ideally for the life of the cable.

Protection against moisture ingress to a telecommunications cable joint can be provided by wrapping an adhesive-coated wrap-around heat-recoverable sleeve around the joint and extending some way along the entrance and exit cables forming the joint, as described in, for example, UK Patent GB-A-1,506,242. As described in GB-A-1,506,242, the heat recoverable sleeve has longitudinal edges which are fastened closely together using a flexible C-shaped metal channel. On heating with a propane flame or hot air gun the assembled wrap-around sleeve shrinks to fit tightly around the cable and this shrinkage, in conjunction with a hot melt adhesive on the inside surface of the sleeve, forms an effective moisture barrier around the joint. The effectiveness of such protective sleeves may be conveniently assessed by pressurising the joint to about 40 kPA (kilo Pascals) with air and then thermally cycling the joint in a water bath from 5°C to 50°C, each cycle being of 5 hours duration. The pressure loss for acceptable protective sleeves should be less than 5 kPa after 50 cycles. This test, and others of a similar nature, are carried out to evaluate protective sleeves for use on distribution or local network cables, even though the cables are not pressurised in service.

In the course of heating such heat-shrinkable wrap-around sleeves to effect shrinkage it is often found that the sleeves split longitudinally as they begin to tighten around the substrate, generally a cable. When such a split occurs it is necessary to replace the torn sleeve with a new one. This is a tedious, time-consuming and expensive procedure.

In an attempt to overcome this problem of splitting during heating of wrap-around heat-recoverable sleeves, heat-recoverable fibre-based sleeves have been developed, and are described in U.K. Patent Application GB-A-2,172,154. However, the manufacture of such fibre-based sleeves requires the introduction of new technology into the well-established manufacturing process for forming wrap-around heat recoverable sleeves and also requires the installation of new equipment to replace or supplement the existing production lines.

It is an aim of the present invention to provide a heat-recoverable sleeve for forming a protective cover on a cable which sleeve has an improved resistance to splitting, particularly as the sleeve begins to tighten around the substrate during heat-shrinking, and which can be produced using the standard and well-established manufacturing processes.

According to a first aspect of the present invention, there is provided a heat-recoverable sleeve for forming a protective cover on a cable, the heat-recoverable sleeve comprising a cross-linked polymer composition forming a matrix within which are dispersed discrete elastomeric particles.

Thus, in a heat-recoverable sleeve in accordance with the invention, discrete elastomeric particles are dispersed in the cross-linked polymer composition. Such a heat-recoverable sleeve exhibits a high resistance to propagation of splits or cracks and thus is less likely than previous heat-recoverable sleeves to split during heat-shrinking. Such a sleeve can moreover be manufactured using well-established manufacturing processes.

The cross-linked polymer composition preferably comprises a polyolefin and may be a cross-linked polyethylene, or a cross-linked mixture of polyethylene with one or more of ethylene-vinyl acetate copolymer and ethylene-alkyl acrylate copolymer (in particular ethylene-ethyl acrylate copolymer). Preferably, the cross-linked polymer composition comprises a polyethylene, in particular high density polyethylene. However others may be used, including linear low density polyethylene, very low density polyethylene, medium density polyethylene and low density polyethylene or blends of two or more of these.

The elastomeric particles preferably have a size in the range of from 0.1 to 100μm (micrometres) and more preferably in the range of from 0.2 to 10μm.

The amount of elastomer required to be dispersed as discrete cross-linked particles throughout the high density polyethylene is preferably in the range of from 4% to 45% by weight of the sleeve composition and more preferably in the range of from 5% to 25% by weight of the composition.

It is preferrred that the elastomeric particles are cross-linked prior to their incorporation into the polymer composition matrix prior to its cross-linking. Such particles can thereby be reasonably uniformly dispersed throughout the polymer composition, employing conventional plastics melt-mixing equipment, such as a Buss Ko Kneader.

The elastomeric particles may be formed of a polyolefin. Preferred particulate and cross-linked elastomers for use in the present invention are ethylene-propylene co-polymers (EPR) and ethylene-propylene-diene terpolymers (EPDM). These elastomers, EPR and EPDM, dispersed as cross-linked particles of average size 1.0 micrometre or less in a polypropylene matrix are commercially available under the trade names Santoprene (Monsanto plc) and Levaprene (Bayer U.K. Ltd.). Within the context of the present invention Santoprene and Levaprene, and similar products, are essentially masterbatches of cross-linked polyolefin elastomeric particles, the different grades of each having different proportions of dispersed elastomer to polypropylene matrix.

Other elastomeric materials may however be used, for example, natural rubber, butyl rubber, polyisoprene, polybutadiene, a copolymer of styrene and butadiene, a copolymer of styrene and isoprene and a copolymer of butadiene and acrylonitrile.

The heat-recoverable sleeve may be a split sleeve having a longitudinal edges formed so as to be gripped by a fastening member. Thus, for example, the longitudinal edges may have grooves for receiving protrusions of a flexible metal channel member. Other suitable fastening members could however be used. The heat-recoverable sleeve may have an adhesive, for example a hot melt adhesive, coating on an inner surface for ensuring good contact to the cable to be protected. Also, the heat-recoverable sleeve may have a temperature indicating paint on its outer surface which paint changes colour to indicate when the recovery of the sleeve and activation of any hot melt adhesive provided on the inner surface of the sleeve is complete.

As used herein the term sleeve should be understood to include tubular sleeves, wrap round sleeves and split sleeves.

The term elastomeric particle is used in its conventional sense to mean a particle formed from a material having the capability to resume its original shape when a deforming force is removed.

In a further aspect, the present invention provides a method of protecting a cable, which method comprises providing a heat-recoverable sleeve in accordance with the first aspect around the cable and heating the sleeve to cause the sleeve to shrink to fit tightly onto the cable. Where the heat-recoverable sleeve is a split sleeve, the method further comprises clamping the longitudinal edges of the sleeve together using a fastening member prior to heating the heat-recoverable sleeve.

A liner shaped to the cable may be provided around the cable before providing the heat-recoverable sleeve around the cable. For example such a liner may be constructed as to enable a gradual transition to be made from a maximum joint diameter to a smaller diameter cable entering or emerging from a joint between, for example, two cables.

Embodiments of the invention will now be described, by way of example, with reference to the accompanying drawings, in which:

Figure 1 is a perspective view of a joint between two cables provided with a liner about which a heat-recoverable sleeve in accordance with the invention is being provided; and

Figure 2 is a perspective view of one end of the joint shown in Figure 1 for illustrating the situation when the heat-recoverable sleeve has been provided around the joint to form its protective cover.

A heat recoverable sleeve in accordance with the invention comprises a cross-linked polyer composition, preferably a cross-linked polyolefin, forming a matrix within which are dispersed discrete elastomeric particles.

Such heat recoverable sleeves have substantially improved resistance to splitting, particularly as they begin to tighten around a substrate such as a cable during heat-shrinking, and can be produced using the standard and well-established manufacturing processes. In one example, a cross-linked high density polyethylene forms the matrix and the essentially discrete elastomeric particles have a preferred size in the range of from 0.1 to $100\mu$m (micrometres), more preferably in the range of from 0.2 to $10\mu$m.

The amount of elastomeric particulate material required to be dispersed as discrete cross-linked particles throughout the high density polyethylene is preferably in the range of from 4% to 45% by weight of the total wrap-around sleeve composition and more preferably in the range 5% to 25% by weight of the total composition, that is including both the matrix-forming polymer and the discrete elastomeric particles.

It is preferred that the elastomeric particles are cross-linked or vulcanised, as appropriate, prior to their incorporation into the high density polyethylene. Such particles can thereby be reasonably uniformly dispersed as discrete entities throughout the polyethylene, employing conventional plastics melt-mixing equipment, such as a Buss Ko Kneader.

Preferred particulate and cross-linked elastomeric materials are ethylene-propylene co-polymers (EPR) and ethylene-propylene-diene terpolymers (EPDM). These elastomeric materials, EPR and EPDM, dispersed as cross-linked particles of average size 1.0μm or less in a polypropylene matrix, are commercially available under the trade names SANTOPRENE (Monsanto plc) and LEVAPRENE (Bayer U.K. Ltd.). SANTOPRENE and LEVAPRENE, and similar products, are essentially masterbatches of cross-linked polyolefin elastomeric particles, the different grades of each having different proportions of dispersed elastomeric particles to polypropylene matrix.

The high density polyethylene and SANTOPRENE or LEVAPRENE or similar dispersion of cross-linked elastomeric particles in polypropylene (or other polyolefin, especially polyethylene) together with other components of the formulation, which may include carbon-black, antioxidants, a pro-rad for promoting radiation induced cross-linking of the thermoplastics polymer material and to extend the cross-linking of the dispersed elastomeric particles and to promote chemical bonding between the matrix and the elastomeric particles, a processing aid and ethylene-vinyl acetate co-polymer, are melt-mixed together in a Buss Ko Kneader or in another suitable melt mixing machine. After thorough mixing the molten blend is cooled and grandulated and thereafter melt-extruded as, for example, a strip with a continuous neck along each edge which, as will be described below, can subsequently be held together by means of a fastening member in the form, for example, of a flexible C-shaped metal channel.

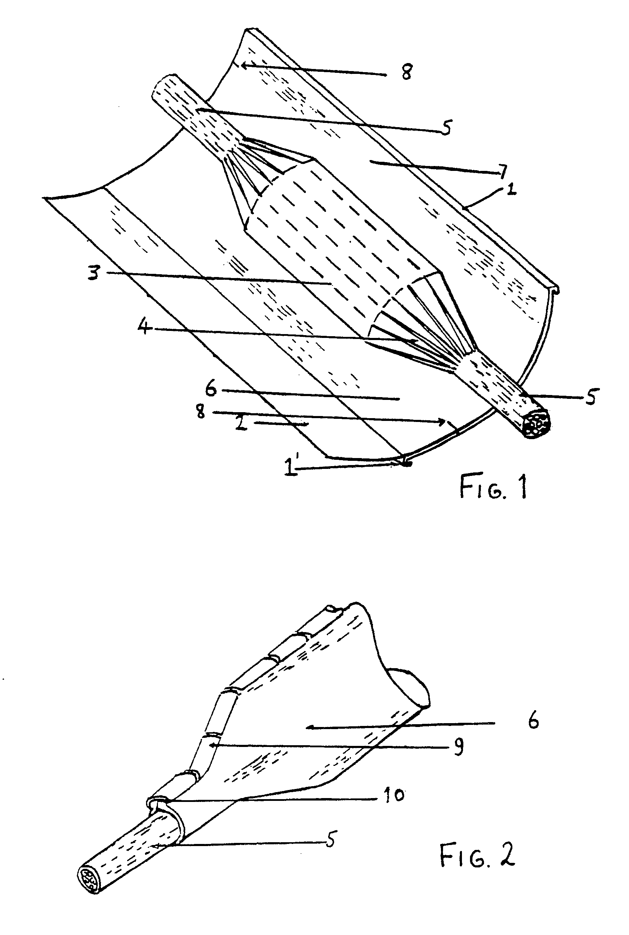

Figure 1 illustrates one example of an extruded strip for forming the heat-recoverable sleeve 6. The strip shown in Figure 1 has two longitudinally extending ribs or protrusions 1 which, when positioned adjacent one another after the strip has been wrapped around, for example, a cable joint, form a neck 1 of the heat-recoverable sleeve. In order to provide a good seal, one of the ribs 1 is spaced from the longitudinal edge of the strip by a tongue 2.

The strip is cross-linked by exposure to a high energy radiation dose of 2 Mrad to 30 Mrad or more preferably to a dose of 5 Mrad to 20 Mrad, from an electron beam or a cobalt-60 source. The strip is then heated above the crystalline melting point of the polyethylene and stretched by 200% to 700% at right angles to its longitudinal edges, but excluding the continuous neck 1 along each edge and the tongue 2. (Figure 1) from the stretching operation. Then, while retaining the stretching force the strip is cooled below about 80°C to give the required heat-recoverable, in particular heat-shrinkable, wrap-around sleeve, having a high resistance to splitting during heat recovery around a cable joint, or other substrate.

As an alternative to adding the discrete elastomeric particles to the thermoplastics material, for example polyethylene, as a cross-linked particulate dispersion in polypropylene, the bulk uncross-linked elastomeric material may be added directly to the polyethylene. Then, the so-called dynamic curing or vulcanization process can be used so that the elastomeric material becomes dispersed as cured particles within the uncross-linked polyethylene. In such a dynamic vulcanization technique, the mixture is milled at a temperature above the curing temperature. This initially causes cross-linked or three dimensional structures to be formed. These are, however, then broken down and dispersed as discrete particles in the uncross-linked matrix provided by the polyethylene.

Polymers other than high density polyethylene may be used as the thermoplastics polymer material for forming, after cross-linking, the matrix in which the discrete cross-linked elastomeric particles are dispersed. These include linear low density polyethylene, very low density polyethylene, medium density polyethylene and low density polyethylene or blends of two or more of these. Blends of polyethylene and ethylene-vinyl acetate co-polymer or an ethylene-alkyl acrylate co-polymer, such as ethylene-ethyl acrylate copolymer, may also be used.

As mentioned above, preferred elastomeric materials for use in the present invention are ethylene-propylene copolymer (EPR) and ethylene-propylene-diene terpolymer but others may be used, including but not restricted to, natural rubber, butyl rubber, polyisoprene, polybutadiene, a copolymer of styrene and butadiene, a copolymer of styrene and isoprene and a copolymer of butadiene and acrylonitile.

As shown in Figure 1, the cable joint formed between entrance and exit cables 5 to be protected by the heat-recoverable sleeve 6 may first be covered by a liner 3. The liner 3 may be constructed from rigid cardboard with creases running along its entire length and separated laterally by about 18mm so as to facilitate wrapping around the joint. As shown in Figure 1, both ends of the liner 3 have long narrow triangular pieces 4 cut out to form a coronet to enable a transition from the maximum joint size to that of the entrance and exit cables 5 at the joint as shown in Figure 1.

The heat-recoverable sleeve 6 is then wrapped around the liner 3 so that the ribs 1 meet to form the longitudinally extending neck which is then clamped by means of a fastening member, in the example shown in Figure 2 a C-shaped flexible metal channel 9.

The heat-recoverable sleeve 6 can then be heat-shrunk. The inner surface of the heat-shrinkable wrap-around sleeve 6 which will contact the liner 3 surrounding the cable joint and the emerging cables 5, is preferably provided with an adhesive layer 7. The adhesive may be a 0.4mm to 2.0mm thick layer of a high performance adhesive and more preferably a 0.6mm to 1.0mm thick layer of a high performance adhesive.

The adhesive is preferably a hot-melt type and suitable such adhesives may be based on a polyamide or an ethylene-vinyl acetate co-polymer. During heat-shrinking of the assembled sleeve, the adhesive layer 7 will melt and flow to form a good seal between the heat-recovered sleeve 6 and the cable joint or substrate.

Although not shown in the Figures, the heat-recoverable wrap-around sleeve 6 may have a temperature indicating paint spattered on its external surface which changes colour during heating to indicate when the recovery of the sleeve and activation of the hot-melt adhesive are complete.

Such a heat-recoverable sleeve 6 shows high resistance to crack or split propagation. It is believed that this very high resistance to split propagation during heat-shrinking of the heat-shrinkable wrap-around sleeve in accordance with the present invention is due to the fact that when a split begins to develop it soon encounters an elastomeric particle. The elastomeric particle absorbs a considerable amount of the split energy before it too either splits or the split moves around it. A split of reduced energy emerges only to encounter another elastomeric particle. Accordingly, the presence of a large number of discrete elastomeric particles dissipates the split energy very quickly and stops the split progressing.

A number of examples will now be described.

Example I

The constituents for forming the heat-recoverable sleeve are given by formulation 1 below:

| Formulation 1 | Parts by weight |
|---|---|
| LUPOLEN 6011 PX | 100 |
| SANTOPRENE 201-87 | 90 |
| Carbon black masterbatch PE2272 | 10 |
| IRGANOX 1010 | 2.5 |
| Triallyl cyanurate | 10 |
| Zinc stearate | 1.7 |

Where LUPOLEN 6011 PX is the trade name for a high density polyethylene supplied by BASF, SANTOPRENE is the trade name for a dispersion of cross-linked polyolefin elastomeric particles in polypropylene supplied by MONSNTO, Carbon black masterbatch PE2272 is produced by Cabot Plastics Ltd., and IRGANOX 1010 is the trade name for an anti-oxidant supplied by Ciba-Geigg plc.

The constituents of formulation 1 were melt-mixed in a Buss Ko Kneader and the extrudate, after cooling, was pelletised. Using a conventional plastics extruder these pellets were used to extrude a strip having a continuous neck or rib 1 (see Figure 1) running along the complete length of both longitudinal edges. The width of the strip, measured between the necks on the longitudinal edges, was 46mm and the thickness was 2.5mm. The strip was cut into 500mm long pieces and two of these were cross-linked by exposure to a radiation dose of 10 Mrad from a cobalt-60 source.

The two cross-linked pieces were heated, one at a time, to about 150°C when they were stretched laterally, between the necks, to a width of 170mm. While retaining the stretching force, the strips were cooled to about 75°C to give heat-shrinkable wrap-around sleeves.

A 0.8mm thick layer 7 of a polyamide-based hot-melt adhesive was applied to the inner surface of each sleeve. The outer surface was provided with a spattered coating of a temperature indicating paint.

A joint on a length of polyethylene-sheathed telecommunications cable was surrounded by a cardboard liner 3 as illustrated in Figure 1. The long triangular pieces 4 on the ends of the liner 3 enable a smooth transition to be achieved from the large joint body to the cables. The heat-shrinkable wrap-around sleeve 6 was assembled around the joint with the adhesive layer 7 in contact with the joint. A cut 8 (see Figure 1) 5mm long was made with a scalpel on each end of the assembled wrap-around sleeve 6, just prior to heat-shrinking.

Figure 2 shows the sleeve after heat-shrinking. As shown the ribs 1 or sleeve edges are held together by means of a C-shaped flexible metal channel 9 and the gap 10 between the edges is sealed by the tongue 2 (Figure 1) which was positioned underneath the other longitudinal edge of the sleeve and in contact with the cable joint.

After assembly and the heat-shrinking of the sleeve 7, the joint was pressurised to 40 kPa with air through a valve inserted in an end-cap on one end of the cable and cycled between -30°C and +50°C for

50 cycles, each cycle being of 5 hours duration. The joint pressure was monitored using a pressure gauge attached to the cable body.

None of the cuts or splits 8 made with the scalpel in the sleeve ends of the two wrap-around sleeves progressed during heat shrinking. Also neither pressurised joint protected by the sleeves exhibited pressure losses of more than 2 kPa after thermal cycling tests.


Example 2

The process described in Example 1 was repeated using formulations 2 and 3 shown below:

| Formulation 2 | Parts by weight |
|---|---|
| LUPOLEN 1804 H | 100 |
| SANTOPRENE 201-55 | 50 |
| Carbon black masterbatch PE2272 | 10 |
| IRGANOX 1010 | 2.5 |
| Triallyl cyanurate | 12 |
| Zinc stearate | 1.7 |

| Formulation 3 | Parts by weight |
|---|---|
| LUPOLEN 1800 M | 50 |
| STAMYLEX 08-076 | 50 |
| SANTOPRENE 201-64 | 60 |
| Carbon black masterbatch PE2272 | 10 |
| Irganox 1010 | 2.5 |
| Triallyl cyanurate | 10 |
| Zinc stearate | 1.5 |

STAMYLEX 08-076 is the trade name of a linear low density polyethylene supplied by DSM whilst LUPOLEN 1804 H and LUPOLEN 1800 M are trade names for low density polyethylene supplied by BASF.

Again the cuts 8 made with the scalpel in the sleeve ends did not progress during heat-shrinking. Moreover the pressurised joints protected by the wrap-around sleeves exhibited pressure losses of less than 3 kPa after the thermal cycling tests.


Example 3

For the purposes of comparison, the process described with reference to Example 1 was repeated using formulation 4 given below which falls outside the scope of the present invention and which does not incorporate any discrete elastomeric particles.

| Formulation 4 | Parts by weight |
|---|---|
| LUPOLEN 1800 M | 75 |
| VISTALON 504 | 37 |
| STAMYLEX 08-076 | 50 |
| Carbon black masterbatch PE2272 | 10 |
| IRGANOX 1010 | 2.5 |
| Triallyl cyanurate | 8 |
| Zinc stearate | 1.5 |

VISTALON 504 is the trade name for an ethylene-propylene rubber marketed by Exxon Chemicals.

In this case, where the cross-linked elastomeric particles were not used, the cuts 8 made with the scalpel in the sleeve ends initiated considerable, and destructive, longitudinal splitting, commencing during the final stages of heat-shrinking, as the sleeves tightened around the substrate.

It should of course be appreciated that a heat recoverable sleeve in accordance with the invention may be formed as a wrap-around or split sleeve or as a tubular sleeve. Where the sleeve is a split sleeve then suitable fastening means other than that described above may be used. A heat-recoverable sleeve in accordance with the invention may be used to protect repair joints or other joints between cables, for example telecommunications cables, other substrates.

From reading the present disclosure, other modifications and variations will be apparent to persons skilled in the art. Such modifications and variations may involve other features which are already known in the heat-shrink sleeve art and which may be used instead of or in addition to features already described herein. Although claims have been formulated in this application to particular combinations of features, it should be understood that the scope of the disclosure of the present application also includes any novel feature or any novel combination of features disclosed herein either explicitly or implicitly, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

## Claims

1. A heat-recoverable sleeve for forming a protective cover on a cable, the heat-recoverable sleeve comprising a cross-linked polymer composition forming a matrix within which are dispersed discrete elastomeric particles.

2. A heat-recoverable sleeve as claimed in Claim 1, wherein the cross-linked polymer composition comprises a material is selected from the group consisting of a cross-linked polyethylene, a cross-linked mixture of a polyethylene and ethylene-vinyl acetate copolymer, a cross-linked mixture of a polyethylene and a ethylene-alkyl acrylate copolymer, and mixtures thereof.

3. A heat-recoverable sleeve as claimed in Claim 1 or 2, wherein the elastomeric particles comprise a polyolefin.

4. A heat-recoverable sleeve as claimed in Claim 3, wherein the elastomeric particles are formed of a material selected from the group consisting of ethylene-propylene-diene terpolymer (EPDM) and ethylene-propylene copolymer (EPR).

5. A heat-recoverable sleeve as claimed in Claim 1 or 2, wherein the elastomeric particles are formed from a material selected from the group consisting of natural rubber, butyl rubber, polyisoprene, polybutadiene, a copolymer of styrene and butadiene, a copolymer of styrene and isoprene and a copolymer of butadiene and acrylonitrile.

6. A heat-recoverable sleeve according to any one of the preceding claims, wherein the elastomeric particles have a size in the range of from 0.1 to 100μm (micrometres).

7. A heat-recoverable sleeve as claimed in any one of the preceding claims, wherein the elastomeric particles form from 4% to 45% by weight of the sleeve.

8. A heat-recoverable sleeve as claimed in any one of the preceding claims, wherein an inner surface of the sleeve is provided with an adhesive layer.

9. A heat-recoverable sleeve as claimed in any one of the preceding claims, wherein the sleeve is a split sleeve having longitudinal edges formed to be gripped by a fastening member.

10. A method of protecting a cable, which method comprises providing a heat-recoverable sleeve in accordance with any one of the preceding claims around the cable and heating the sleeve to cause the sleeve to shrink to fit tightly onto the cable.

11. A method of protecting a cable, which method comprises providing a heat-recoverable sleeve in accordance with Claim 9 around the cable, clamping the longitudinal edges of the sleeve together using a fastening member and heating the sleeve to cause the sleeve to shrink to fit tightly onto the cable.

12. A method of protecting a cable as claimed in Claim 10 or 11, further comprising providing a liner shaped to the cable around the cable before providing the heat-recoverable sleeve around the cable.

13. A junction between two or more cables protected by a heat-recoverable sleeve in accordance with any one of Claims 1 to 9 and/or by using a method in accordance with Claim 10, 11 or 12.

FIG. 1

FIG. 2